# EUROPEAN PATENT SPECIFICATION

(11) **EP 1 313 958 B1**
(45) Date of publication and mention of the grant of the patent: **10.08.2005**
(21) Application number: 00956552.4
(22) Date of filing: 28.08.2000
(51) Int. Cl.: F16C 32/06, F16C 13/02

(54) **BEARING OF CYLINDERS AND ROLLERS WITH THE AID OF GAS BEARINGS**
GASLAGERUNG FÜR ZYLINDER UND WALZEN
SUPPORT DE CYLINDRES ET DE ROULEAUX AU MOYEN DE PALIERS A GAZ

(43) Date of publication of application: 28.05.2003
(73) Proprietor: Pikoteknik Oy, 86110 Parhalahti (FI)
(72) Inventor: KORPIOLA, Kari, FIN-00170 Helsinki (FI)
(74) Representative: Järveläinen, Pertti Tauno Juhani
(86) International application number: PCT/FI2000/000729
(87) International publication number: WO 2002/018806

(56) References cited:
- WO-A1-99/02872

## Description

The present invention concerns the application of gas bearings to support rolls and rollers especially in machines used in process industry.

At present, most of the rotating machines used in process industry are provided with rolling or slide bearings. These work reliably in many circumstances. On the other hand, they involve the problem of lubrication, because if any lubricant can get into the final product, such as paper or foodstuffs, this is a detriment. Therefore, they need constant maintenance and condition monitoring to ensure that the processes will not be interrupted. They are reliable and durable if used properly. This requirement is often fulfilled by lubricating them well and ensuring a continuous and troublefree supply of lubricant to the bearings. This often requires oil circulating lubrication and good oil seals, otherwise water, dust, high temperature, dirt etc. produced by the processes may destroy the bearings, which would otherwise perform well. Similarly, a well designed and workable lubrication solution may be unworkable in a paper machine environment, e.g. in rolling bearings designed for the spreader rolls, which do not work as the load applied to them is too low. This may result e.g. in an interruption of the papermaking process. Therefore, efforts are being made to find new solutions that would be more reliable in use in difficult process conditions.

Gas bearings provide a solution that works in dirty and hot conditions and in otherwise difficult circumstances. The properties of a gaseous lubricant include stability and immunity to fouling. When a gaseous lubricant is used, the gas can often be let out into the working environment without it causing any soiling of the process products. Such process environments are e.g. the food, textile, pharmaceutical and paper industries, where it is required that no lubricants be allowed to get into the final product. Another obvious advantage is the stability and availability of a gaseous lubricant. For example, in circumstances involving a high temperature and radiation, many other lubricants lose their original lubricating properties. Availability is also an important question regarding lubricants in extreme conditions. Air is available as a lubricant of uniform quality even in difficult process conditions, in almost unlimited quantities and at a relatively low cost.

As for performance, the use of gas as a lubricant as compared with e.g. oil makes it possible to have object surfaces rotated at a very high velocity relative to each other. This is because gas has a significantly lower viscosity than oil. The viscosity of the lubricant determines the friction between the slide surfaces as well as the heat produced, which often limits the rotational speed of two bodies relative to each other. Thus, using air, considerably higher rotational speeds are achieved as compared with solutions using slide bearings.

In addition, the closed lubrication systems of rolling and slide bearings have to be protected against dirt penetrating into it from outside. In gas bearings, the gas flowing out of the bearing clearance keeps the bearing surfaces clean. Using gas bearings, it is possible to increase the reliability of the bearings of cylinders and reduce friction in the bearings. Likewise, the number of seals can be reduced as it is not necessary to circulate the lubricant and used lubricant can be let out into the working environment without causing any soiling in the process.

In gas bearings, a thin gas layer separates the surfaces moving against each other, so there is no contact between the surfaces as in roller or ball bearings. There are two main types of gas bearing, aerodynamic gas bearing, in which the gas pressure in the lubricating film carrying the load is developed by the bearing itself, and aerostatic gas bearing, in which the gas pressure in the lubricating film carrying the load is developed by using an external pressure source. This is often implemented using a compressor. In addition, there is a hybrid gas bearing, which is a combination of these two types. In the case of an aerostatic gas bearing, pressurized gas is continuously supplied from an external source into the bearing. The gas flows from small capillary holes or from a porous material into the bearing clearance, being discharged along the edges of the body into the ambient air. With such a bearing, a desired bearing capacity is easily achieved by varying the pressure of the gas source in the range of 1 - 20 bar.

In gas bearings, shaft support can be implemented using a cylindrical radial bearing with an axial thrust bearing, a conical bearing, a Yates bearing or a spherical bearing.

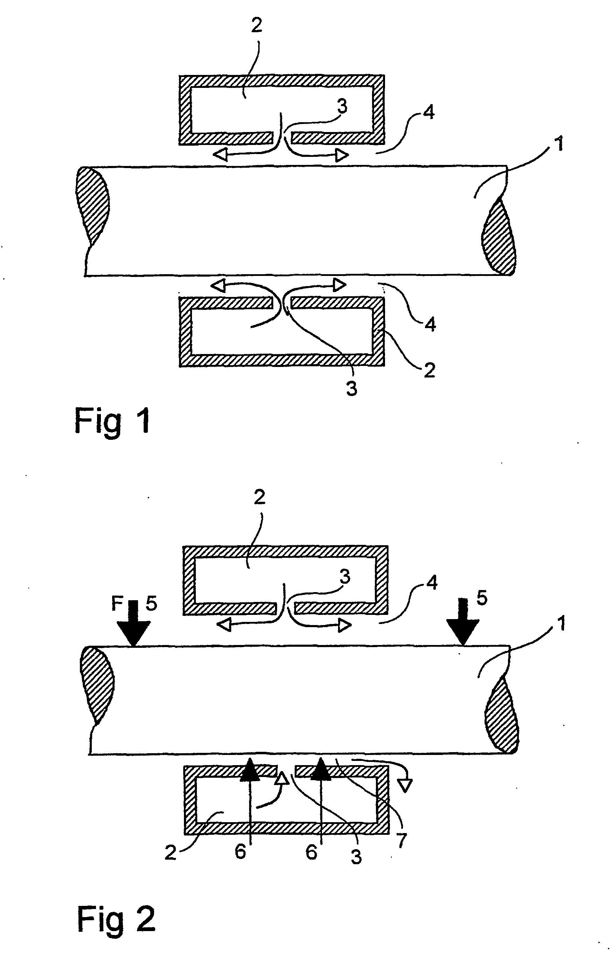

Fig. 1 and 2 illustrate the operating principle of an axial gas bearing as used e.g. in a paper machine, Fig. 1 presenting a situation without a load and Fig. 2 a situation with a load. A roll in the paper machine comprises a smooth rotating shaft 1, which is provided with a bearing which bears the force acting as a load on it. The bearing has a bearing shell 2, into which the lubricating gas is supplied. From the shell, the gas is passed through a throttle hole 3 into the bearing clearance 4. Fig 2 additionally shows a downward force (F) 5 deflecting the shaft from its balanced position, a counter force 6 (air cushion) acting against the load 5 produced by the gas film, and a reduced bearing clearance 7 below the shaft 1. The throttle holes 3 are very small, even under 0.1 mm, and the clearances 4 between the slide surfaces are of the order of 0.01 mm.

In an unloaded gas bearing (Fig. 1), the shaft is in a balanced position with respect to the upper and lower surfaces, and the bearing air cushion is equal at both the upper and lower surfaces.

When a load is applied to a shaft 1 mounted with gas bearings (Fig. 2), the shaft 1 is deflected from the central position, which leads to a pressure increase in the lower part of the bearing, producing a counter force (-F) 6 that carries the load F. The bearing clearance 4 on the upper side is now increased and the pressure at the upper surface of the bearing is reduced, thus reducing the force acting on the shaft 1 from above. Due to the reduction of the force on the upper side and the increase of the force on the lower side, the shaft 1 again tends to return to a balanced position as illustration in Fig. 1. Once the shaft 1 has found the balanced position, the bearing clearances 4 on the upper and lower sides are again equal and the gas bearing is in balance. For the gas bearing to work properly, the gas throttling holes 3 on the upper and lower sides must be of the right size. If the throttle holes 3 are too large, then the gas flowing into the bearing clearance cannot get out of the clearance quickly enough, and this again reduces the load on the upper bearing surface. The throttle hole 3 has to be small enough to allow the load-carrying gas to flow out of the narrow bearing clearance. In addition, the size of the gas throttling holes 3 has to be correct in respect of the load, speed of rotation of the bearing, etc.

A drawback with present gas bearings is the complexity of their installation.

The object of the invention is to achieve a modular gas bearing system in which the bearings consist of separate detachable sleeves or segments and several bearing elements can be manufactured selecting the tolerance and stabilized, and in which gas bearings can be manufactured and mounted on a curved or straight shaft as an independent finished unit on the same principle as rolling bearings.

The gas bearing system of the invention is thus characterized in that the inner part fitted on the outer surface of the shaft of the roll or roller consists of separate detachable sleeves or segments forming an inner ring, that the outer part rotating around the inner ring and having a cylindrical inner surface or consisting of cylindrical segments forms an outer ring, and that the inner and outer rings are attached via flexible or articulated joints to the shaft and the rotating envelope so that they allow the inner and outer rings to adapt to a common axis of rotation formed by the shaft and the envelope.

With the gas bearing arrangement of the invention, it is possible to achieve a high level of manufacturing precision as well as cost savings. Furthermore, using a bearing solution that is separate from the shaft and roll, the installation of the bearing and the roll can be made easier. It is easier to manufacture a gas bearing as a separate component e.g. for a roll in a paper machine or off-machine coater than directly on the roll body or shaft. Moreover, using a cylindrical slide surface provided with gas bearings on a separate roll shaft facilitates the manufacture of rotating rolls.

In the case of many rolls used in papermaking, if the gas bearing is made from separate components, it will be preferable to implement the balancing and assembly of each roll component separately and to finally put the balanced structure together into a single roll assembly. Such applications are spreader rolls, sectional rolls, run-out rolls and other rolls used in paper manufacture.

In the following, the invention will be described in detail by the aid of an example with reference to the attached drawings, wherein

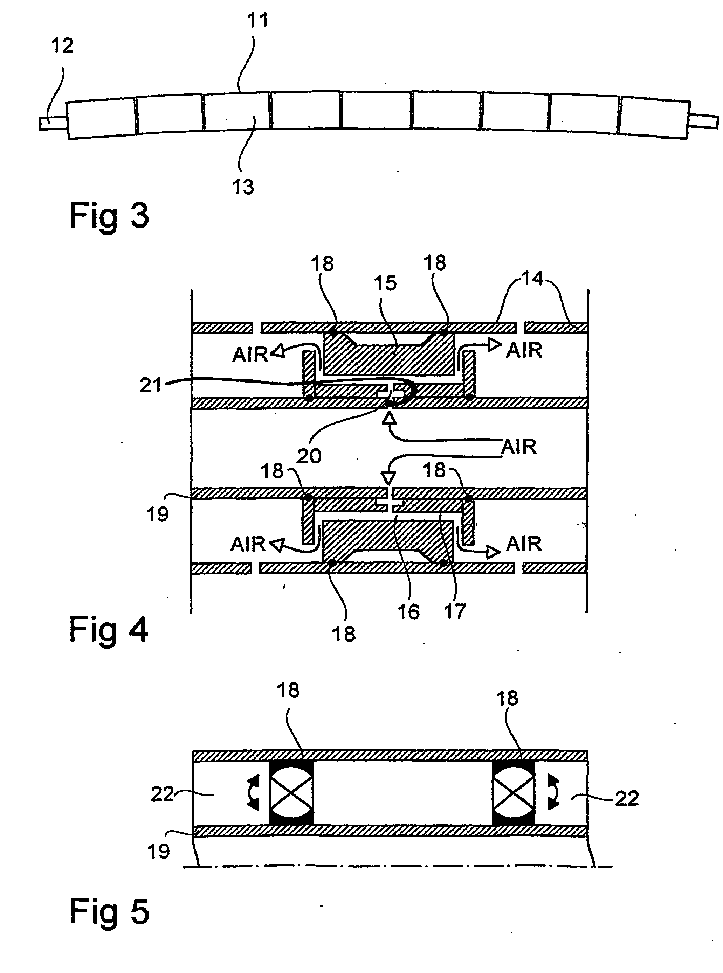

Fig. 1 illustrates the operating principle of an axial gas bearing when unloaded, Fig. 2 illustrates the operating principle of an axial gas bearing when loaded, Fig. 3 presents a curved spreader roll, Fig. 4 illustrates the structure of an individual roll segment of a spreader roll as presented in Fig. 3, according to the invention, and Fig. 5 shows how gas bearings can be connected to each other.

Fig. 3 presents a curved spreader roll 11 of a paper machine. It comprises a fixed curved shaft 12 with rotating roll segments 13 mounted on it with bearings, said segments forming a roll envelope. The roll segments are supported by gas bearings as illustrated in Fig. 4. These have a modular structure such that they can be manufactured and mounted on the shaft as an independent finished unit.

The bearings comprise an outer ring 15 mounted inside the cylindrical envelope 14 of the roll segment and rotating together with it, said outer ring having a nearly rectangular cross-section and comprising a cylindrical inner surface, straight edges on the sides and a narrow slot in the middle part against the envelope 14, and an inner ring 17 fastened to a stationary hollow shaft consisting of a cylinder 19 fastened by its ends, said inner ring comprising a base placed against the cylinder 19 and straight side edges so that the outer ring can be partially fitted inside the inner ring 17. Between the outer and inner rings, there is a narrow bearing clearance 16, typically under 0.1 mm.

The bearing consists of separate detachable sleeves or segments so that the separate detachable sleeves or segments connected to the outer surface of the roll shaft 19 form the inner ring 17, and that the outer ring 15 rotating around the inner ring has a cylindrical inner surface or consists of cylindrical segments.

To allow the bearing surfaces to adapt to dimensional changes with respect to the axis of rotation, the attachment has to be flexible and self-adapting. With such a structure, it is possible to compensate for misalignment of the shaft and the bearing. The outer ring 15 is fastened by its edges to the envelope 14 of the roll segment and the inner ring 17 is fastened by its edges to the shaft 19 via flexible or articulated fastening elements 18 permitting swinging of the inner and outer rings 15,17.

The air used for lubrication is passed into the bearing from inside the shaft via holes 21 provided in the cylinder 19, through which the air flows into the bearing clearance via gas nozzles 20 placed in the middle part of the inner ring 17. From the bearing clearance 16, the air then flows out of the bearing via the gaps between the edges of the inner and outer rings.

The gas bearing of the invention is manufactured as a separate component and then mounted with fastening elements 18 e.g. on a spreader roll as illustrated in Fig. 3. Each roll component is balanced and assembled separately, and the balanced structure is finally put together to form a single roll assembly.

Fig. 5 shows how two gas bearings 22 according to the invention can be attached to each other via flexible fastening elements 18.

It is obvious to the person skilled in the art that the invention is not restricted to the example described above, but that it can be varied within the scope of the claims presented below.

## Claims

1. Gas bearing (22) for use in rolls (11) and rollers having a shaft (19) and a rotating envelope part (14) supported by bearings on the shaft, said bearing comprising an inner part (17) fitted to the shaft (19) and an outer part (15) fitted to the envelope (14), with a clearance between the inner and outer parts, into which clearance a gas used for lubrication is supplied via nozzles (20) or a porous material,
**characterized in that** the inner part (17) fitted on the outer surface of the shaft (19) of the roll or roller consists of separate detachable sleeves or segments forming an inner ring (17), that the outer part rotating around the inner ring and having a cylindrical inner surface or consisting of cylindrical segments forms an outer ring (15), and that the inner and outer rings (17,15) are attached via flexible or articulated joints (18) to the shaft (19) and the rotating envelope (14) so that they allow the inner and outer rings (17,15) to adapt to a common axis of rotation formed by the shaft (19) and the envelope (14).

2. Gas bearing as defined in claim 1, **characterized in that** the gas used for lubrication is passed from the shaft (19) through the inner surface of the inner ring (17) via gas nozzles (20) fitted in the inner ring (17) into the bearing clearance, whereupon the gas then flows out of the bearing via gaps between the edges of the inner and outer rings.

3. Gas bearing as defined in claim 1, **characterized in that** the outer ring (15) has side edges, that the inner ring (17) comprises a base placed against the shaft (19) and side edges, and that the outer ring can be at least partially fitted inside the inner ring (17).

4. Gas bearing system as defined in any one of the preceding claims, **characterized in that** the bearing is applied to implement the bearings of a spreader roll of a paper machine and finishing machines.

5. Gas bearing system as defined in any one of the preceding claims 1 - 3, **characterized in that** the structure is applied to implement the bearings of a sectional roll of a paper machine and finishing machines.

6. Gas bearing system as defined in any one of the preceding claims 1 - 3, **characterized in that** the structure is applied to implement the bearings of the run-out roll of a paper machine and finishing machines.

## Patentansprüche

1. Gaslagerung (22) zur Verwendung bei Rollen (1) und Walzen mit einer Welle (19) und einem sich drehenden Mantelteil (14), der von einer Lagerung auf der Welle unterstützt wird, wobei die Lagerung einen inneren Teil (17) aufweist, der an der Welle (19) befestigt ist, und einen äußeren Teil (15), der an dem Mantel (14) befestigt ist, mit einem Freiraum zwischen den inneren und äußeren Teilen, wobei in diesen Freiraum ein zur Schmierung verwendetes Gas über Düsen (20) oder ein poröses Material zugeführt wird,
**dadurch gekennzeichnet,**
**dass** das an der äußeren Oberfläche der Welle (19) der Rolle oder Walze befestigte innere Teil (17) aus separaten abnehmbaren Hülsen oder Segmenten besteht, die einen inneren Ring (17) bilden,
**dass** der äußere Teil, der sich um den inneren Ring dreht und eine zylindrische Innenoberfläche besitzt oder aus zylindrischen Segmenten besteht, einen äußeren Ring (15) bildet, und
**dass** die inneren und äußeren Ringe (17, 15) über flexible oder gelenkige Verbindungen (18) an der Welle (19) und dem sich drehenden Mantel (14) angebracht sind, sodass sie den inneren und äußeren Ringen (17, 15) ermöglichen, sich an eine gemeinsame von der Welle (19) und dem Mantel (14) gebildete Rotationsachse anzupassen.

2. Gaslagerung nach Anspruch 1,
**dadurch gekennzeichnet,**
**dass** das zur Schmierung verwendete Gas von der Welle (19) durch die innere Oberfläche des inneren Ringes (17) über in den inneren Ring (17) eingepasste Gasdüsen (20) in den Freiraum der Lagerung geführt wird, woraufhin das Gas dann aus der Lagerung über Spalte zwischen den Kanten der inneren und äußeren Ringe ausströmt.

3. Gaslagerung nach Anspruch 1,
**dadurch gekennzeichnet,**
**dass** der äußere Ring (15) Seitenkanten besitzt,
**dass** der innere Ring (17) eine Basis aufweist, die gegen die Welle (19) und die Seitenkanten platziert ist, und
**dass** der äußere Ring wenigstens teilweise innerhalb des inneren Ringes (17) eingepasst sein kann.

4. Gaslagerungssystem nach einem der vorstehenden Ansprüche,
**dadurch gekennzeichnet,**
**dass** die Lagerung zum Implementieren der Lagerungen einer Steck- oder Spreizwalze einer Papierherstellungsmaschine und von Bearbeitungsmaschinen eingesetzt wird.

5. Gaslagerungssystem nach einem der vorstehenden Ansprüche 1 bis 3,
**dadurch gekennzeichnet,**
**dass** die Struktur zum Implementieren der Lagerungen einer Glieder- oder Schnittwalze einer Papierherstellungsmaschine und von Bearbeitungsmaschinen eingesetzt wird.

6. Gaslagerungssystem nach einem der vorstehenden Ansprüche 1 bis 3,
**dadurch gekennzeichnet,**
**dass** die Struktur zum Implementieren der Lagerungen einer Auslaufwalze einer Papierherstellungsmaschine und von Bearbeitungsmaschinen eingesetzt wird.

## Revendications

1. Palier à gaz (22) pour une utilisation dans des cylindres (11) et des rouleaux comportant un axe (19) et une partie enveloppante rotative (14) soutenue par des paliers sur l'axe, ledit palier comportant une partie interne (17) fixée à l'axe (19) et une partie externe (15) fixée à l'enveloppe (14), avec un espace entre la partie interne et la partie externe, espace dans lequel un gaz, utilisé pour la lubrification, est amené par le biais de buses (20) ou d'un matériau poreux, **caractérisé en ce que** la partie interne (17), fixée sur la surface externe de l'axe (19) du cylindre ou du rouleau, est composée de manchons ou segments détachables séparés formant un anneau interne (17), **en ce que** la partie externe, tournant autour de l'anneau interne et comportant une surface interne cylindrique ou étant composée de segments cylindriques, forme un anneau externe (15) et **en ce que** l'anneau interne et l'anneau externe (17,15) sont fixés, par le biais de joints souples ou articulés (18), à l'axe (19) et à l'enveloppe rotative (14) de telle sorte qu'ils permettent à l'anneau interne et à l'anneau externe (17, 15) de s'adapter à un axe commun de rotation formé par l'axe (19) et l'enveloppe (14).

2. Palier à gaz selon la revendication 1, **caractérisé en ce que** le gaz utilisé pour la lubrification passe de l'axe (19) à l'espace de palier, en passant par la surface interne de l'anneau interne (17), par le biais de buses (20) de gaz insérées dans l'anneau interne (17), après quoi le gaz s'écoule alors hors du palier par le biais d'interstices entre les bords de l'anneau interne et de l'anneau externe.

3. Palier à gaz selon la revendication 1, **caractérisé en ce que** l'anneau externe (15) possède des bords latéraux, **en ce que** l'anneau interne (17) comprend une base placée contre l'axe (19) et des bords latéraux et **en ce que** l'anneau externe peut être au moins partiellement inséré dans l'anneau interne (17).

4. Système de palier à gaz selon l'une quelconque des revendications précédentes, **caractérisé en ce que** le palier est employé pour réaliser les paliers d'un rouleau étendeur d'une machine à papier et de machines de finition.

5. Système de palier à gaz selon l'une quelconque des revendications précédentes 1 à 3, **caractérisé en ce que** la structure est employée pour réaliser les paliers d'un cylindre transversal d'une machine à papier et de machines de finition.

6. Système de palier à gaz selon l'une quelconque des revendications précédentes 1 à 3, **caractérisé en ce que** la structure est employée pour réaliser les paliers du cylindre de sortie d'une machine à papier et de machines de finition.
